(19) **Europäisches Patentamt European Patent Office Office européen des brevets**

(11) **EP 1 327 047 B1**

(12) **FASCICULE DE BREVET EUROPEEN**

(45) Date de publication et mention de la délivrance du brevet:
**12.09.2018 Bulletin 2018/37**

(21) Numéro de dépôt: **01978545.0**

(22) Date de dépôt: **17.10.2001**

(51) Int Cl.:
**B32B 17/10** (2006.01)     **E06B 3/663** (2006.01)
**E06B 3/67** (2006.01)

(86) Numéro de dépôt international:
**PCT/FR2001/003203**

(87) Numéro de publication internationale:
**WO 2002/033207 (25.04.2002 Gazette 2002/17)**

(54) **VITRAGE FEUILLETé ET SES MOYENS D'éTANCHéIFICATION PéRIPHéRIQUE**

VERBUNDGLASSCHEIBE UND DEREN PERIPHERISCHEN DICHTUNGSMITTEL

LAMINATED GLAZING AND MEANS FOR ITS PERIPHERAL SEALING

(84) Etats contractants désignés:
**AT BE CH CY DE DK ES FI FR GB GR IE IT LI LU MC NL PT SE TR**

(30) Priorité: **18.10.2000 FR 0013307**

(43) Date de publication de la demande:
**16.07.2003 Bulletin 2003/29**

(73) Titulaire: **SAINT-GOBAIN GLASS FRANCE 92400 Courbevoie (FR)**

(72) Inventeurs:
• **BETEILLE, Fabien F-75017 Paris (FR)**
• **GIRON, Jean-Christophe 52074 Aachens (DE)**

(74) Mandataire: **Saint-Gobain Recherche Département Propriété Industrielle 39 Quai Lucien Lefranc 93300 Aubervilliers (FR)**

(56) Documents cités:
**EP-A- 0 916 801     DE-A- 4 104 108 US-A- 6 001 487**

**Description**

La présente invention concerne les vitrages feuilletés, et plus particulièrement ceux qui présentent des fonctionnalités conférées par une ou plusieurs couches et/ou un ou plusieurs éléments discontinus pouvant être de nature organique, minérale ou hybride organique/minérale. Les vitrages feuilletés sont usuellement constitués de deux substrats rigides entre lesquels est disposée une feuille ou une superposition de feuilles de polymère du type thermoplastique. L'invention inclut aussi les vitrages feuilletés dits « asymétriques » utilisant un substrat seul rigide du type verre associé à plusieurs feuilles de polymère, dont généralement une au moins à base de polyuréthane. L'invention inclut aussi les vitrages feuilletés ayant au moins une feuille intercalaire à base d'un polymère adhésif simple ou double face du type élastomère (c'est-à-dire ne nécessitant pas une opération de feuilletage au sens classique du terme, feuilletage imposant un chauffage généralement sous pression pour ramollir et rendre adhérente la feuille intercalaire thermoplastique).

Les couches ou éléments discontinus évoqués ci-dessus se trouvent généralement disposés contre un des substrats rigides (ou contre le seul substrat rigide), entre ledit substrat et la feuille ou une des feuilles flexibles à base de polymère. Ils peuvent aussi être disposés entre deux substrats flexibles ou semi-flexibles eux-mêmes associés à un substrat rigide ou disposés entre deux substrats rigides. Ils seront désignés par la suite sous le terme de « systèmes actifs». Le vitrage peut en comporter plusieurs.

Les premiers types de système actif intéressant l'invention sont les systèmes électrochimiques en général, et plus particulièrement les systèmes électrocommandables du type vitrage à propriétés énergétiques et/ou optiques variables. Ils comprennent également les systèmes photovoltaïques et électroluminescents.

Ces systèmes ont des applications très diverses : les cellules photovoltaïques convertissent l'énergie solaire en énergie lumineuse.

Les systèmes électrocommandables permettent, notamment, d'obtenir des vitrages dont on peut modifier à volonté l'obscurcissement/le degré de vision ou de filtration des rayonnements thermiques/solaires. Il s'agit par exemple des vitrages viologènes, qui permettent de régler la transmission ou l'absorption lumineuse, comme ceux décrits dans les brevets US-5 239 406 et EP-612 82.

Les systèmes électroluminescents convertissent directement l'énergie électrique en lumière, un exemple étant décrit dans le brevet FR- 2 770 222.

Il y a aussi les vitrages électrochromes, qui permettent de moduler la transmission lumineuse et thermique. Ils sont décrits, notamment, dans les brevets EP-253 713, EP-670 346, l'électrolyte étant sous forme d'un polymère ou d'un gel et les autres couches étant de type minéral. Un autre type est décrit dans les brevets EP-867 752, EP-831 360, PCT/FR00/00675, PCT/FR99/01653, l'électrolyte étant cette fois sous la forme d'une couche essentiellement minérale, l'ensemble des couches du système étant alors essentiellement minérale : on désigne communément ce type de système électrochrome sous le terme d'électrochrome " tout-solide ". Il existe aussi des systèmes électrochromes où l'ensemble des couches est de type polymère, on parle alors d'électrochrome " tout-polymère ".

De façon générale, les systèmes électrochromes comportent deux couches de matériau électrochrome séparées par une couche d'électrolyte et encadrées par deux couches électroconductrices.

Il existe aussi les systèmes appelés " valves optiques " : il s'agit de films à base de polymère dans lesquels sont disposées des microgouttelettes contenant des particules aptes à se placer selon une direction privilégiée sous l'action d'un champ électrique. Un exemple en est décrit dans le brevet WO93/09460.

Il existe aussi les systèmes à cristaux liquides, d'un mode de fonctionnement similaire aux précédents : ils utilisent un film de polymère placé entre deux couches conductrices et dans lequel sont dispersées des gouttelettes de cristaux liquides, notamment nématiques à anisotropie diélectrique positive. Quand le film est sous tension, les cristaux liquides sont orientés selon un axe privilégié, ce qui autorise la vision. Hors tension, le film devient diffusant. Des exemples en sont décrits dans les brevets EP-238 164, US-4 435 047, US-4 806 922, US-4 732 456. On peut aussi citer les polymères à cristaux liquides cholestériques, comme ceux décrits dans le brevet WO92/19695.

Un second type de système actif auquel s'intéresse l'invention concerne les couches ou empilements de couches dont les propriétés se modifient sans alimentation électrique, sous l'effet de la chaleur ou de la lumière : on peut citer les couches thermochromes, notamment à base d'oxyde de vanadium, les couches thermotropes ou les couches photochromes. Dans le cadre de la présente invention et dans tout le présent texte, il faut prendre le terme « couche » dans son sens le plus large : il peut s'agir aussi bien de matériaux minéraux que de matériaux de type organique, des polymères tout particulièrement, pouvant se présenter sous forme de films de polymère ou même de films de gel. C'est notamment le cas des gels thermotropes, par exemple ceux décrits dans les brevets EP 639 450, US 5 615 040, WO 94/20294 et EP 878 296.

Un troisième type de système actif auquel s'intéresse l'invention concerne les éléments sous forme de fils ou de réseaux chauffants, ou des couches conductrices chauffantes, par effet Joule (il peut s'agir de fils incrustés à la surface de la feuille thermoplastique, comme cela est décrit notamment dans les brevets EP- 785 700, EP- 553 025, EP- 506 521 et EP- 496 669).

Un quatrième type de système actif auquel s'intéresse l'invention concerne les couches ou empilements de couches à propriétés de contrôle solaire, bas-émissives, notamment à base d'une ou plusieurs couches d'argent intercalées par des couches en diélectrique. Ces empilements peuvent être déposés sur un des substrats rigides ou être déposés sur un substrat souple du type PET(polyéthylène téréphtalate) que l'on dispose entre deux feuilles en polymère thermoplastique du type PVB(polyvinylbutyral) venant assembler les deux substrats rigides du type verre. On en trouve des exemples dans les brevets EP-638 528, EP-718 250, EP-724 955 , EP-758 583 et EP- 847 965.

Certains de ces systèmes ont besoin de moyens de connexion électrique à une source de courant extérieure qui doivent être conçus de façon à éviter tout court-circuit. Tous ces systèmes ont en commun le fait qu'ils peuvent, à plus ou moins grande échelle, être sensibles aux agressions mécaniques, chimiques, au contact de l'eau, à des échanges avec l'extérieur.

Ce sont les raisons pour lesquelles, pour préserver leur bon fonctionnement, ces systèmes actifs sont usuellement disposés contre au moins un substrat porteur protecteur. Ils sont le plus souvent disposés entre deux substrats protecteurs, par exemple en verre, en polymère rigide ou semi-rigide ou flexible, soit par contact direct soit par l'intermédiaire de feuille(s) de polymère d'assemblage du type thermoplastique. Il s'agit le plus souvent de la structure feuilletée décrite plus haut. Sont souvent prévus des moyens d'étanchéification périphériques dont le but est d'isoler au maximum le système actif de l'extérieur. On utilise généralement des joints en caoutchouc butyl associés à des joints en silicone ou en polysulfure, qui sont capables, notamment, de limiter la diffusion d'eau du système actif vers l'extérieur et réciproquement.

Cependant, ces joints sont susceptibles d'améliorations à plusieurs titres. En effet, ces joints doivent répondre au mieux à au moins trois exigences qui ne sont pas forcément compatibles. D'une part, comme on l'a vu, ils doivent isoler le système actif de l'extérieur. Ils doivent donc jouer le rôle de barrière le plus efficacement possible, notamment vis-à-vis de l'eau sous forme vapeur. Et les joints utilisés jusque-là ne donnent pas entièrement satisfaction sur ce point. leurs propriétés mécaniques peuvent être bien inférieures à ce qui serait requis.

On connaît par le document US-A-6001487 un vitrage feuilleté comportant deux substrats entre lesquels est disposé un système actif, ledit vitrage étant muni d'un moyen d'étanchéification périphérique comprenant un joint à base de polyisobutylène.

L'invention a alors pour but d'améliorer la conception des joints d'étanchéification périphériques des vitrages feuilletés précités, notamment en ce qui concerne leurs propriétés chimiques et/ou leurs propriétés mécaniques, et/ou leur mise en oeuvre et/ou leur configuration par rapport aux substrats protégeant les systèmes actifs.

L'invention a tout d'abord pour objet un vitrage feuilleté, dont les différentes structures ont été décrites plus haut, et comprenant un « système actif » parmi l'un de ceux cités précédemment qui est disposé entre deux substrats dudit vitrage. L'invention consiste à munir ce vitrage d'un premier moyen d'étanchéification périphérique du système actif, notamment vis-à-vis de l'eau sous forme vapeur, comprenant au moins un joint à base de polymère(s) thermofusible(s) choisi(s) parmi au moins une des familles de polymère suivantes : éthylène vinylacétate, polyisobutylène, polyamide. Ces polymères peuvent se trouver également sous forme de copolymères, de polymères branchés. Ces trois familles de polymère thermofusible sont particulièrement avantageuses à deux titres au moins : elles offrent une étanchéité intrinsèque élevée, et elles sont notamment très imperméables à l'eau sous forme vapeur. Etant thermofusibles, elles sont également particulièrement faciles à mettre en oeuvre, à moindre coût : on peut les injecter sous forme liquide ou semi-liquide aux endroits voulus aisément, par des moyens industriels connus. On peut également les poser sous forme de cordons pré-extrudés ou pré-coulés.

Ces polymères constituent de préférence entre 40 et 98% en poids du matériau constitutif du joint. On peut en effet y ajouter des additifs, ayant notamment trois fonctions différentes :

- d'une part, on peut ajouter au moins un agent de réticulation, par exemple du type isocyanate et/ou époxyde.

- d'autre part, on peut ajouter un certain nombre de charges minérales, de préférence en poudre, et par exemple en oxyde d'aluminium ou de magnésium, en sable de silice, en quartz, en farines diatomées, en silice thermique dite aussi de pyrogénation, en silice non pyrogénée. Il peut s'agir aussi de silicates comme en sable de silice, en quartz, en farines diatomées, en silice thermique dite aussi de pyrogénation, en silice non pyrogénée. Il peut s'agir aussi de silicates comme le talc, le mica, le kaolin, de microsphères de verre, ou d'autres poudres minérales comme le carbonate de calcium, ou des fibres minérales .

  ➤ enfin, on peut ajouter une ou plusieurs résines dites "tackifiantes" ou " collantes ", dont la fonction est d'améliorer l'adhérence du joint avec le matériau avec lequel il va se trouver en contact. Quand il est inséré entre deux substrats, il va donc s'agir d'un composé permettant d'améliorer l'adhérence mutuelle entre le joint et le substrat (verre, polymère, ...), ou entre le joint et le matériau susceptible de recouvrir le substrat dans leurs zones de contact (couche minérale, ...). Il peut notamment s'agir de composés de masse molaire très faible, d'au plus 10.000, notamment inférieure à 5000 ou comprise entre 500 et 2000, et un point de ramollissement de préférence compris entre 50 et 130°C, notamment entre 90 et 100°C. Un exemple est une résine aliphatique hydrocarbonée saturée.

Il est en effet important non seulement de choisir un polymère intrinsèquement étanche, mais qui adhère également très bien aux matériaux avec qui il est en contact, de façon à éviter de créer des chemins de diffusion à l'interface joint/matériau à étanchéifier, de façon à éviter toute délamination du joint. A la place ou en plus de l'utilisation d'un tel agent collant, on peut aussi jouer sur la répartition des masses molaires présentes dans le polymère thermofusible, tout particulièrement dans le cas des polyisobutylènes : mélanger plusieurs masses molaires permet d'avoir une bonne résistance au fluage en température (pour les hautes masses) et d'avoir aussi une bonne adhérence aux matériaux à étanchéifier, un bon « tack » (pour les faibles masses molaires).

Globalement les joints selon l'invention présentent avantageusement un point de ramollissement compris entre 70 et 180°C, notamment entre 90 et 100°C ou entre 145 et 170°C : on peut donc les liquéfier pour les poser/les mettre en forme à des températures acceptables industriellement.

Avantageusement, ils présentent aussi une viscosité comprise entre 0,1 et 20 Pa.s, notamment entre 0.8 et 8 Pa.s, mesurée à 190°C.

Enfin, avantageusement, ils présentent une perméabilité à l'eau sous forme vapeur inférieure ou égale à 5 ou 4 ou 3 $g/m^2/24h$, notamment inférieure ou égale à 1$g/m^2/24h$ selon la norme ASTM E 9663 T : cela signifie qu'ils sont particulièrement imperméables à l'eau.

On peut substituer les polymères thermofusibles des joints décrits plus haut par des mastics, qui sont des polymères se comportant à chaud comme les polymères thermofusibles, mais dont la transformation de la phase solide à la phase liquide n'est pas réversible contrairement aux thermofusibles (car il s'agit de thermodurcissables). L'avantage de pouvoir les mettre en place dans le vitrage en phase liquide existe aussi pour cette famille des mastics, à condition de sélectionner ceux d'entre eux qui ne réticulent qu'après leur mise en place. On préfère tout particulièrement les mastics à base de polyuréthane, dont la perméabilité à l'eau sous forme vapeur est inférieure ou égale à 4 $g/m^2/24h$, voire proche de 2. Des mastics à base de PU satisfaisant aux critères recherchés (ayant notamment une perméabilité à l'eau sous forme vapeur inférieure ou égale à 5 $g/m^2/24$ h), sont les mastics commercialisés sous la référence IS442 par la société TREMCO (perméabilité de 5 $g/m^2/24$ h), et sous la référence PU 3189/2 par la société LE JOINT FRANÇAIS (perméabilité 4 $g/m^2/24$ h). L'avantage de ces mastics particuliers est qu'ils peuvent assurer à la fois une bonne imperméabilité à l'eau vapeur et à l'eau liquide, alors qu'il est préférable de « doubler » les joints à base de polymères thermofusibles d'un second joint destiné à servir de barrière à l'eau liquide (des exemples en sont détaillés par la suite). Il peut aussi s'agir de mastics à base de polysulfure ou de silicone.

En conclusion sur la nature chimique des polymères utilisés dans les joints selon l'invention, ces polymères thermofusibles étaient connus dans des applications très différentes, notamment dans l'industrie de la chaussure et du cartonnage, et il s'est avéré qu'ils étaient particulièrement intéressants dans le tout autre domaine technique qui concerne l'invention.

Un autre volet de l'invention concerne la façon dont on peut améliorer la résistance mécanique des joints d'étanchéité pour ces vitrages, notamment mais non exclusivement, des joints thermofusibles décrits plus haut : l'invention a également pour objet le même type de vitrage, muni d'un premier moyen d'étanchéification périphérique, notamment vis-à-vis de l'eau sous forme vapeur, qui comprend au moins un joint à base de polymère et qui est associé à des moyens de renforcement mécanique et/ou de calibrage de l'espacement entre les deux substrats entre lesquels se trouve le système actif.

En effet, il est très avantageux, dans un certain nombre de cas de figure, que le joint ait une résistance mécanique significative. Cela est tout particulièrement le cas quand le dispositif se présente sous la forme d'un vitrage feuilleté comprenant deux substrats rigides ou semi-rigides entre lesquels on a le système actif et une ou plusieurs feuilles de polymère d'assemblage. Dans ce cas, une configuration commode consiste à prévoir que la ou les feuilles de polymère d'assemblage (ainsi que le système actif lui-même) soient de dimensions inférieures à celles des deux substrats. On crée ainsi à la périphérie du vitrage une gorge où l'on va pouvoir loger le ou les joints d'étanchéification. Cependant cette configuration peut solliciter excessivement le vitrage sur le plan mécanique lors de l'opération de feuilletage (qui se fait usuellement sous pression et généralement à chaud). En effet, les bords des substrats du type verre, dans la zone où se situe la gorge périphérique évoquée plus haut, se trouvent en porte-à-faux et ont tendance à fléchir sous la pression par rapport à la partie plus centrale desdits substrats.

Le feuilletage va donc avoir tendance à amorcer une délamination aux bords des feuilles de thermoplastique, à générer de ce fait des bulles. Dans le pire des cas, on peut même craindre que les substrats en verre ne se brisent. Utiliser dans ces conditions un ou plusieurs joints périphériques que l'on va renforcer mécaniquement est extrêmement avantageux : ces renforts mécaniques vont pouvoir maintenir l'écartement approprié entre les deux substrats à leur périphérie, en s'opposant à leur tendance à la flexion dans la zone périphérique " critique " de la gorge, pendant l'opération d'assemblage au moins. Dans certaines applications, ce renfort mécanique peut aussi s'avérer très utile dans le produit fini, indépendamment du fait qu'il y ait besoin ou non d'une opération d'assemblage du type feuilletage sous pression.

Un premier type de moyen de renforcement/de calibrage peut être sous forme de billes rigides ou semi-rigides, notamment en métal du type aluminium, acier inox, en verre, en céramique. Les billes peuvent être également en zéolite de préférence hydrophile.

Il est connu d'utiliser des billes d'aluminium dans les joints de double vitrage bombé, comme cela est décrit notamment dans les brevets DE- 91 162068, DE-41 04108 et EP- 499 525. Cependant dans le cas des double-vitrages, leur fonction est différente : dans un double-vitrage, le " vide " de matière entre les deux verres ne se trouve pas à la périphérie, mais dans la partie centrale du vitrage. En outre, les double-vitrages ne subissent pas d'opération d'assemblage à chaud sous pression. Enfin, dans le cas des double-vitrages, les billes utilisées dans les joints servent à maintenir un écartement nominal entre les verres du double-vitrage final, en luttant contre une tendance à la flexion des bords des verres dans le sens opposé à la tendance à la flexion des vitrages feuilletés intéressant plus particulièrement l'invention.

L'invention a donc trouvé une nouvelle application à ces renforts ponctuels connus dans le domaine des vitrages isolants.

Un second type de moyen de renforcement/de calibrage peut être sous forme de plots. Ils peuvent être de section carré, rectangulaire, trapézoïdale. Ils peuvent être en métal, verre, céramique, fritte de verre à bas point de fusion. Leur forme géométrique est variable, il peut s'agir de tout type de polyèdre. L'important est qu'ils définissent de préférence des surfaces d'appui planes vis-à-vis des substrats entre lesquels ils vont être disposés. En fait, on connaît ce type de plot dans une toute autre application : dans les double-vitrages dits "sous vide " où le vide est réalisé entre les deux verres afin d'atteindre une isolation thermique très élevée pour un encombrement minimum.

Des exemples de ces plots et de leurs modes de fabrication et de pose sont décrits dans les brevets EP-645 516 et EP-627 389.

Ces plots ou ces billes sont de préférence noyés dans le joint à base de polymère, ou tout au moins partiellement incrustés dedans. Pour associer les billes au joint, on peut notamment utiliser le dispositif décrit dans le brevet DE-41 04108 précité.

Pour déposer les plots, il est nécessaire de les déposer un à un pour qu'ils se placent correctement. Aussi bien dans le cas des billes que des plots, on peut prévoir un espacement régulier des billes/plots le long du joint. L'espacement entre deux billes ou deux plots qui se suivent peut être par exemple de 1 à 5 cm, avec de toute façon une présence systématique aux coins (une bille ou plot de chaque côté, près de l'angle). Les billes ou plots peuvent aussi être espacés, positionnés de façon aléatoire.

Le troisième type de moyen de renforcement/de calibrage peut se présenter sous forme d'un cadre, notamment en métal, verre, céramique, fritte de verre à bas point de fusion. La section du cadre peut être carré, rectangulaire, etc..., comme celle des plots évoqués plus haut. Ce cadre peut être d'une pièce, ou être en plusieurs parties qu'on met bout à bout lors de la pose. On peut ainsi se rapprocher de la structure des cadres/entretoises généralement métalliques, qui servent à maintenir l'espacement entre les verres des double-vitrages standards. Avantageusement, au moins une partie des surfaces d'appui du cadre sur les substrats est enduite de joint(s) à base de polymère(s). On peut ainsi avoir un cadre de section carrée ou en forme de H, dont les surfaces d'appui sont entièrement enduites de joint avant d'être posé.

Un quatrième type de moyen de renforcement /de calibrage consiste à utiliser un ou plusieurs fils métalliques. Avantageusement, ceux-ci sont entièrement gainés/noyés dans un joint de polymère préformé, par exemple un joint de section cylindrique que l'on vient ensuite ramollir et poser de façon appropriée. Ces fils peuvent être en aluminium, en acier, en cuivre. Il s'agit de préférence d'un métal relativement ductile.

Ces différents moyens de renfort sont à dimensionner de façon appropriée. Ainsi, quand il s'agit d'un vitrage feuilleté, il est préférable que le diamètre ($d_1$) des billes et/ou la hauteur ($h_1$) des plots et/ou le diamètre ($d_2$) du ou des fils métalliques et/ou la hauteur ($h_2$) du cadre soient tels que ces différents moyens puissent se loger sans problème entre les deux substrats. Ils peuvent même servir à calibrer leur espacement.

Dans le vitrage feuilleté, on respecte de préférence la relation :

$$e/2 \leq h_1, h_2, d_1, d_2 \leq e - 0,1 \text{ mm,}$$

avec (e) l'épaisseur totale de la ou des feuilles intercalaires thermoplastiques utilisée(s) pour le feuilletage, ou l'écartement désiré entre les deux substrats qu'il y ait ou non de feuille de polymère intercalaire. Généralement, cette valeur (e) est comprise entre 0,025mm et 1,25 mm, de préférence entre 0,35 et 1,25 mm (Quand il s'agit d'une feuille thermoplastique, son épaisseur est généralement comprise entre 0,35 et 1,25 mm. Quant il s'agit d'un polymère adhésif double face, son épaisseur est généralement comprise entre 0,025 et 0,1 mm. Le renforcement mécanique est le plus utile dans le cas des polymères thermoplastiques).

Avantageusement, le vitrage selon l'invention comporte un second moyen d'étanchéification périphérique sous forme d'au moins un joint étanche vis-à-vis de l'eau liquide. Il peut notamment être choisi à base de polyuréthane, de silicone, de polysulfure.

Ce second moyen d'étanchéification périphérique peut aussi prendre la forme d'un joint en polymère thermoplastique, par exemple en polyvinylbutyral PVB, en éthylène vinylacétate EVA, ou en certains polyuréthanes. Avantageusement, ce joint peut être en fait de même nature chimique, ou de nature chimique proche, de celle des feuilles intercalaires thermoplastiques servant au feuilletage du vitrage.

On a ainsi découpé en retrait la ou les feuilles intercalaires par rapport aux deux verres, afin de créer une gorge périphérique pour y loger le ou les joints, et on peut faire en sorte que la gorge soit munie d'un ou de deux joints tels que décrits plus haut. Puis, on peut achever de la « combler » avec une bande de polymère thermoplastique de la même origine que les feuilles intercalaires. Ces bandes assurent en effet correctement le rôle d'étanchéification aux liquides, et sont en un matériau déjà disponible puisqu'on y a recours pour faire les intercalaires : c'est une solution simple et efficace, que de « détourner » ainsi des feuilles thermoplastiques pour leur faire jouer le rôle de joints complémentaires. Ce joint thermoplastique est de préférence continu tout autour du vitrage. Il peut aussi être discontinu. Il vient ainsi « emprisonner » le ou les autres joints disposés avant lui dans la gorge périphérique.

Dans ce cas-là, de préférence les premiers et seconds moyens d'étanchéification du dispositif comprennent des joints qui sont accolés. On peut faire une co-injection/une co-extrusion par exemple de deux types de joints de formulations chimiques différentes. On peut aussi déposer côte-à-côte deux cordons pré-extrudés ou pré-coulés. On peut faire en sorte que tous les joints soient logés dans la gorge périphérique décrit plus haut. On a alors un dispositif dont l'étanchéification est affleurante, et ne " déborde " pas des substrats, ce qui est à la fois esthétique et pratique pour le montage du substrat dans des véhicules ou bâtiments.

On peut poser le ou les joints selon l'invention sur le dispositif déjà assemblé. On peut aussi les poser sur un des substrats du dispositif, avant son assemblage avec l'autre substrat (cas des cordons évoqués plus haut).

On peut aussi utiliser un joint unique, à partir du moment où sa nature chimique le rend imperméable à la fois à l'eau liquide et à l'eau vapeur de façon satisfaisante.

On peut adapter aussi la forme même des substrats du dispositif, pour améliorer l'efficacité de l'étanchéification et/ou faciliter la pose des joints. On peut ainsi utiliser des substrats dont le bord intérieur (celui tourné vers l'autre substrat) est bizauté, ce qui permet de délimiter une gorge périphérique élargie, qui n'a plus une simple section rectangulaire, mais au moins en partie trapézoïdale par exemple. Les joints utilisés dans le cadre de l'invention sont disposés de façon à ne pas avoir de contact avec les couches électroconductrices du système actif.

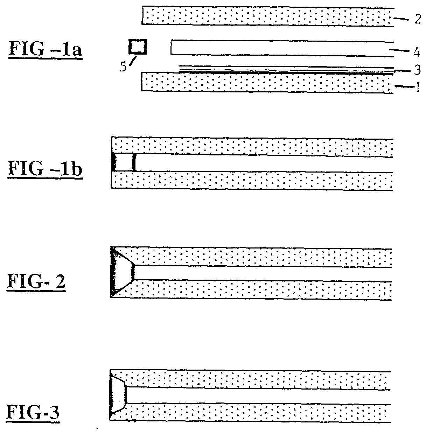

L'invention sera décrite ci-après plus en détail avec les exemples non limitatifs suivants à l'aide des figures 1a, 1b, 2 et 3. Ces figures représentent en coupe, de manière très schématique, un vitrage électrochrome feuilleté étanchéifié selon l'invention. Les exemples se rapportent tous à un vitrage électrochrome " tout solide ".

L'empilement de couche électroactif d'un système électrochrome " tout solide " est typiquement le suivant :

➤ une première couche conductrice transparente en oxyde d'étain dopé au fluor $SnO_2$ :F (ou en oxyde d'indium dopé à l'étain ITO),

➤ une première couche de matériau électrochrome, anodique, en oxyde d'iridium hydraté (ou en oxyde de nickel hydraté),

➤ un électrolyte se décomposant en une couche d'oxyde de tungstène associée à une couche d'oxyde de tantale hydraté (ou en oxyde de silicium dopé aluminium $SiO_2$ :Al, ou en oxyde de zirconium $ZrO_2$ dopé ou non et par exemple dopé avec de l'yttrium),

➤ une seconde couche de matériau électrochrome, cathodique, à base d'oxyde de tungstène éventuellement hydraté,

➤ une seconde couche électroconductrice conductrice en ITO par exemple.

On trouvera plus de détails sur ces couches ou des couches similaires dans les brevets cités en préambule de la demande.

Cet empilement se trouve incorporé dans les vitrages feuilletés représentés aux figures 1a, 1b, 2 et 3 : ils sont composés de deux verres de 2,1 mm d'épaisseur 1, 2 entre lesquels on retrouve l'empilement électrochrome 3 et une feuille d'intercalaire thermoplastique 4 en polyuréthane (PU) de 0 ,76 mm d'épaisseur (le PU peut être remplacé par de l'étylène-vinylacétate EVA).

Les figures 1a, 1b montrent le premier joint d'étanchéité 5 avant assemblage puis une fois le vitrage assemblé.

Les figures 2 et 3 sont des variantes, où les bords intérieurs des verres 1, 2 ont été bizautés.

Dans tous les cas, la feuille d'intercalaire est de dimensions inférieures à celles des deux verres, de façon à délimiter une gorge périphérique dans laquelle le joint est logé. Quand les verres sont bizautés, la gorge périphérique n'est plus de section rectangulaire, mais de section trapézoïdale (figure 2) ou de forme trapézoïdale aux bords arrondis (figure 3).

Le joint 5 se trouve alors affleurant et remplit entièrement la gorge. Un exemple de formulation pour ce joint est le suivant :

➤ une base d'étylène-vinylacétate dont de 5 à 40% de vinylacétate et de 40 à 95% d'étylène (il s'agit notamment de l'EVA commercialisé par la société National Starch sous le nom de " Instant Pak 2300 " ou de l'EVA commercialisé par la société TRL sous le nom de " Thermelt 2147/2157), cette base pouvant contenir au moins un des additifs suivants :
➤ une résine tackifiante
➤ un agent de réticulation
➤ une charge

Avec ce type de formulation, on obtient un joint qui est à la fois remarquablement imperméable à l'eau sous forme vapeur et très adhérent au verre, ce qui le rend très efficace.

Alternativement, on peut utiliser à la place du joint à base d'EVA un joint à base de polyamide ou de polyisobutylène.

Dans l'exemple précité, le joint est thermofusible (c'est un « hot-melt » selon le terme anglais). On peut donc le fondre, puis l'injecter sous pression dans la gorge périphérique du vitrage une fois assemblé. On peut aussi le poser à la périphérie du verre 1 avant son assemblage avec le verre 2, l'opération de feuilletage le calibrant à la section voulue sous l'effet de la pression et éventuellement de la chaleur.

On prévoit usuellement un second joint non représenté, qui vient entourer le joint 5 et qui sert, de manière connue, à réaliser l'étanchéité vis-à-vis de l'eau liquide. On peut le déposer :

  ➤ par extrusion de polyuréthane PU ou de tout polymère thermoplastique élastomèreTPE
  ➤ par injection réactive de PU (technique que l'on désigne souvent sous le terme de « RIM » en anglais, pour « Reactive Injection Molding »)
  ➤ par injection thermoplastique d'un mélange PVC (polychlorure de vinyle)/TPE
  ➤ par injection et vulcanisation de terpolymère d'éthylène, de propylène et d'un diène EPDM.

Il peut aussi s'agir d'une bande de PU ou d'EVA de même nature que celle de la feuille intercalaire thermoplastique 4.

La pose peut se faire simultanément ou consécutivement avec celle du joint 5, avant ou après assemblage du vitrage). Il peut être " débordant ", recouvrir les chants des deux verres, ou venir s'accoler au joint 5 dans la gorge périphérique du vitrage de façon à ce que l'ensemble des deux joints soit affleurant dans le vitrage feuilleté final.

Le joint 5 est, selon une variante préférée, renforcé mécaniquement à l'aide de billes de verre ou en zéolite d'un diamètre d'environ 0,6 mm (légèrement inférieur donc à l'épaisseur de la feuille intercalaire en PU). Ces billes sont partiellement insérées sur le bord extérieur du joint 5 à l'aide du dispositif décrit dans le brevet DE- 41 04108.9 précité, de façon à ce qu'il y ait un espacement entre deux billes de l'ordre de 2 cm. Ces billes vont avoir un rôle très positif lors de l'assemblage du vitrage. De la figure 1a, 1b, on comprend que lorsque le vitrage est mis sous pression pendant l'opération de feuilletage, les bords du vitrage correspondant à la zone périphérique dépourvue d'intercalaire tendent à fléchir dans le sens indiqué par les flèches. En conséquence, il y a un risque de décollement de l'intercalaire à sa périphérie voire un risque de bris de verre. La présence des billes dans le joint 5 va maintenir un écartement entre les verres dans cette zone périphérique sensible, va empêcher ce phénomène de flexion. Ces billes servent donc de renfort ponctuel pendant le feuilletage (elles continuent bien sûr à renforcer le joint dans le produit final). Elles sont faciles à poser, efficaces et peu coûteuses.

L'invention a donc mis au point une nouvelle formulation chimique de joint et un nouveau moyen pour le renforcer mécaniquement. Ces moyens d'étanchéification sont efficaces dès qu'il s'agit de protéger des couches /éléments entre deux substrats qui sont sensibles à l'eau et, de façon générale, à toute exposition à l'atmosphère.

On peut bien sûr aussi les utiliser pour les vitrages à système actif fonctionnant en réflexion (miroir électrochrome du type rétroviseur par exemple), pour des vitrages où l'intercalaire thermoplastique est remplacé par un film en polymère adhésif double-face.

Ils s'appliquent aussi aux substrats non verriers.

**Revendications**

1. Vitrage feuilleté comportant deux substrats (1,2) entre lesquels est disposé un système actif (3), comprenant un premier moyen d'étanchéification périphérique (5), notamment vis-à-vis de l'eau sous forme vapeur, comprenant au moins un joint à base de polymère(s) thermofusible(s) choisi(s) parmi au moins une des familles de polymère suivantes : éthylène-vinylacétate, polyisobutylène, polyamide, ou à base d'un mastic, notamment à base de polyuréthane, *caractérisé en ce qu'il* est sous forme d'un vitrage feuilleté, avec deux substrats (1,2) rigides ou semi-rigides entre lesquels se trouve le système électroactif (3) surmonté d'au moins une feuille intercalaire (4) à base de polymère thermoplastique, la ou les feuilles intercalaire(s) (4) ayant des dimensions inférieures à celles des deux substrats (1,2), de façon à créer une gorge périphérique entre lesdits substrats, le(s) joint(s) du premier moyen d'étanchéification périphérique (5) comprenant des moyens de renforcement mécanique et/ou de calibrage de l'espacement entre les deux substrats étant logés au moins en partie, et de préférence entièrement, dans ladite gorge, et en ce que le(s) joint(s) sont disposés de façon à ne pas avoir de contact avec les couches électroconductrices du système actif (3).

2. Vitrage selon la revendication 1, *caractérisé en ce que* le système actif (3) est un système électrochimique, notamment un système électrocommandables à propriétés énergétiques/optiques variables comme un système électrochrome tout solide, un système à valve optique, un système à cristaux liquides, un système viologène, un système photovoltaïque ou un système électroluminescent.

3. Vitrage selon l'une des revendications précédentes *caractérisé en ce que* le système actif (3) est une couche ou un empilement de couches thermochrome, thermotrope, photochrome, de contrôle solaire ou bas-émissive.

**4.** Vitrage selon l'une des revendications précédentes **caractérisé en ce que** le système actif (3) est un réseau de fils chauffant ou une couche chauffante.

**5.** Vitrage selon la revendication 1, *caractérisé en ce que* le bord intérieur d'au moins un des substrats, notamment des deux substrats, est biseauté, de façon à délimiter une gorge périphérique élargie.

**6.** Vitrage selon l'une des revendications précédentes, *caractérisé en ce que le*(s) joint(s) (5) à base de polymère du premier moyen d'étanchéification périphérique comporte(nt) aussi au moins un agent de réticulation, notamment en isocyanate et/ou en époxyde.

**7.** Vitrage selon l'une des revendications précédentes, *caractérisé en ce que* le(s) joint(s) à base de polymère du premier moyen d'étanchéification périphérique comporte(nt) aussi au moins une résine collante, notamment choisie parmi des résines ayant une masse molaire inférieure à 10.000 ou 5000, du type résine aliphatique hydrocarbonée.

**8.** Vitrage selon l'une des revendications précédentes, *caractérisé en ce que* le(s) joint(s) à base de polymère du premier moyen d'étanchéification périphérique comportent aussi au moins une charge minérale, notamment choisie parmi l'oxyde d'aluminium ou de magnésium, le sable de silice, le quartz, la silice de pyrogénation ou non pyrogénée, le talc, le mica, le kaolin, des microsphères de verre, du carbonate de calcium.

**9.** Vitrage selon l'une des revendications précédentes, *caractérisé en ce que* le(s) joint(s) du premier moyen d'étanchéification périphérique présente(nt) un point de ramollissement compris entre 70 et 180°C, notamment entre 90 et 100°C ou entre 145 et 170°C.

**10.** Vitrage selon l'une des revendications précédentes, *caractérisé en ce que* le(s) joint(s) du premier moyen d'étanchéification périphérique présente(nt) une viscosité comprise entre 0,1 et 20 Pa.s, notamment comprise entre 0,8 et 8 Pa.s à 190°C .

**11.** Vitrage selon l'une des revendications précédentes, *caractérisé en ce que* le(s) joint(s) du premier moyen d'étanchéification périphérique présente(nt) une perméabilité à l'eau sous forme vapeur inférieure ou égale à 3 g/nW24h selon la norme ASTM E 9663 T.

**12.** Vitrage selon l'une des revendications précédentes, *caractérisé en ce que* le(s) joint(s) du premier moyen d'étanchéification périphérique est (sont) posé(s) par extrusion ou injection en phase liquide.

**13.** Vitrage selon l'une des revendications précédentes, *caractérisé en ce que* le premier moyen d'étanchéification périphérique comprend au moins un joint à base de polymère(s) associé à des moyens de renforcement mécanique et/ou de calibrage de l'espacement entre les deux substrats, lesdits moyens de renforcement et/ou de calibrage comprenant des billes rigides ou semi-rigides, notamment en métal, du type aluminium, acier, en verre, en céramique, en zéolite de préférence hydrophile.

**14.** Vitrage selon l'une des revendications précédentes, *caractérisé en ce que* le premier moyen d'étanchéification périphérique comprend au moins un joint à base de polymère(s) associé à des moyens de renforcement mécanique et/ou de calibrage de l'espacement entre les deux substrats, lesdits moyens de renforcement et/ou de calibrage comprenant des plots, notamment des polyèdres ayant une section carrée, rectangulaire ou trapézoïdale, notamment en métal, en verre, en céramique, en fritte de verre à bas point de fusion.

**15.** Vitrage selon l'une des revendications précédentes, *caractérisé* en *ce que* le premier moyen d'étanchéification périphérique comprend au moins un joint à base de polymère(s) associé à des moyens de renforcement mécanique et/ou de calibrage de l'espacement entre les deux verres, lesdits moyens de renforcement et/ou de calibrage comprenant un ou plusieurs fils métalliques.

**16.** Vitrage selon l'une des revendications 13 à 15, *caractérisé en ce que* les billes et/ou plots et/ou fils métalliques sont noyés dans le joint à base de polymère(s), ou au moins partiellement incrustés dans ledit joint.

**17.** Vitrage selon l'une des revendications 13 à 16, *caractérisé en ce qu'il* est sous forme d'un vitrage feuilleté, avec les deux substrats rigides (1,2) ou semi-rigides entre lesquels se trouve le système actif (3) et éventuellement une feuille ou une pluralité de feuilles intercalaires (4) à base de polymère thermoplastique, *et en ce que* le diamètre (di) des billes et/ou la hauteur (l') des plots et/ou le diamètre (d2) du ou des fils et/ou la hauteur ($h_2$) du cadre est compris entre e/2 et e - 0,1 mm avec (e) l'épaisseur totale de la ou des feuilles intercalaires (4) ou l'écartement voulu entre Les deux substrats (1,2).

**18.** Vitrage selon la revendication 17, *caractérisé en ce que* la valeur (e) est comprise entre 0,35 mm et 1,25 mm.

**19.** Vitrage selon l'une des revendications précédentes, *caractérisé en ce qu'il* comporte un second moyen d'étanchéification périphérique, sous forme d'au moins un joint étanche vis-à-vis de l'eau liquide, notamment choisi à base de polyuréthane, de silicone, de polysulfure.

**20.** Vitrage selon la revendication 19, *caractérisé en ce que* les premier et second moyens d'étanchéification périphérique comprennent des joints qui sont accolés.

**21.** Procédé de fabrication du vitrage selon l'une des revendications précédentes, *caractérisé en ce qu'on* dépose le ou les joints des moyens d'étanchéification périphérique par injection sous forme liquide, par extrusion ou sous forme de cordons préextrudés ou pré-coulés, sur le vitrage déjà assemblé ou sur l'un des substrats du vitrage avant assemblage.

**Patentansprüche**

**1.** Verbundverglasung, die zwei Substrate (1, 2) umfasst, zwischen welchen ein aktives System (3) angeordnet ist, das ein erstes Mittel zum umfänglichen Abdichten (5) umfasst, insbesondere gegen Wasser in Form von Dampf, das mindestens eine Dichtung auf der Basis wärmeschmelzbaren(r) Polymers (Polymere) umfasst, das / die aus mindestens einer der folgenden Polymerfamilien ausgewählt sind: EthylenVinylacetat, Polyisobutylen, Polyamid, oder auf der Basis eines Kitts, insbesondere auf Polyurethanbasis, *dadurch gekennzeichnet, dass* sie in Form einer Verbundverglasung mit zwei starren oder halbstarren Substraten (1, 2) ist, zwischen welchen sich das elektroaktive System (3) befindet, überlagert von mindestens einer Zwischenlage (4) auf der Basis thermoplastischen Polymers, wobei die Zwischenlage(n) (4) Maße hat (haben), die kleiner sind als die der zwei Substrate (1, 2), um eine umfängliche Nut zwischen den Substraten zu schaffen, wobei die Dichtung(en) des ersten umfänglichen Abdichtmittels (5) mechanische Verstärkungs- und/oder Kalibrierungsmittel der Beabstandung zwischen den zwei Substraten umfassen, die mindestens zum Teil und bevorzugt vollständig in der Nut aufgenommen sind, und dass der (die) Dichtung(en) derart angeordnet sind, dass sie keinen Kontakt mit den elektrisch leitfähigen Schichten des aktiven Systems (3) haben.

**2.** Verglasung nach Anspruch 1, *dadurch gekennzeichnet, dass* das aktive System (3) ein elektrochemisches System ist, insbesondere ein elektrisch steuerbares System mit variablen energetischen/optischen Eigenschaften, wie ein vollständig festes elektrochromes System, ein System mit optischem Ventil, ein System mit Flüssigkristallen, ein viologenes System, ein fotovoltaisches System oder ein elektrolumineszierendes System.

**3.** Verglasung nach einem der vorhergehenden Ansprüche, *dadurch gekennzeichnet, dass* das aktive System (3) eine Schicht oder eine Stapelung thermochromer, thermotroper, fotochromer, solargesteuerter oder niedrigemissiver Schichten ist.

**4.** Verglasung nach einem der vorhergehenden Ansprüche, *dadurch gekennzeichnet, dass* das aktive System (3) ein Netzwerk von Heizdrähten oder eine heizende Schicht ist.

**5.** Verglasung nach Anspruch 1, *dadurch gekennzeichnet, dass* der innere Rand mindestens eines der Substrate, insbesondere der zwei Substrate, derart abgeschrägt ist, dass eine erweiterte umfängliche Nut abgegrenzt wird.

**6.** Verglasung nach einem der vorhergehenden Ansprüche, *dadurch gekennzeichnet, dass* die Dichtung(en) (5) auf Polymerbasis des ersten umfänglichen Abdichtmittels mindestens ein Vernetzungsmittel, insbesondere aus Isocyanat und/oder aus Epoxid, umfasst (umfassen).

**7.** Verglasung nach einem der vorhergehenden Ansprüche, *dadurch gekennzeichnet, dass* die Dichtung(en) auf Polymerbasis des ersten umfänglichen Abdichtmittels mindestens ein klebendes Harz umfasst (umfassen), das insbesondere aus den Harzen ausgewählt ist, die eine Molmasse haben, die kleiner als 10.000 oder 5000 ist, vom Typ aliphatisches kohlenwasserstoffhaltiges Harz.

**8.** Verglasung nach einem der vorhergehenden Ansprüche, *dadurch gekennzeichnet, dass* die Dichtung(en) auf Polymerbasis des ersten umfänglichen Abdichtmittels auch mindestens eine mineralische Füllung umfasst (umfassen), die insbesondere aus Aluminiumoxid oder Magnesiumoxid, Quarzsand, Quarz, pyrogenem oder nicht pyrogenem Silizium, Talk, Mica, Kaolin, Glasmikrosphären, Calciumcarbonat ausgewählt ist.

**9.** Verglasung nach einem der vorhergehenden Ansprüche, *dadurch gekennzeichnet, dass* die Dichtung(en) des ersten umfänglichen Abdichtmittels einen Erweichungspunkt aufweist (aufweisen), der zwischen 70 und 180 °C, insbesondere zwischen 90 und 100 °C oder zwischen 145 und 170 °C, inklusive liegt.

**10.** Verglasung nach einem der vorhergehenden Ansprüche, *dadurch gekennzeichnet, dass* die Dichtung(en) des ersten umfänglichen Abdichtmittels eine Viskosität zwischen 0,1 und 20 Pa.s, insbesondere zwischen 0,8 und 8 Pa.s, inklusive bei 190 °C aufweist (aufweisen).

11. Verglasung nach einem der vorhergehenden Ansprüche, *dadurch gekennzeichnet, dass* die Dichtung(en) des ersten umfänglichen Abdichtmittels eine Durchlässigkeit von Wasser in Form von Wasserdampf kleiner oder gleich 3 g/nW24h gemäß der Norm ASTM E 9663 T aufweist (aufweisen).

12. Verglasung nach einem der vorhergehenden Ansprüche, *dadurch gekennzeichnet, dass* die Dichtung(en) des ersten umfänglichen Abdichtmittels durch Extrusion oder Einspritzen in flüssiger Phase verlegt wird (werden).

13. Verglasung nach einem der vorhergehenden Ansprüche, *dadurch gekennzeichnet, dass* das erste umfängliche Abdichtmittel mindestens eine Dichtung auf der Basis von Polymer(en), kombiniert mit mechanischen Verstärkungs- und/oder Kalibrierungsmitteln der Beabstandung zwischen den zwei Substraten, umfasst, wobei die Verstärkungs- und/oder Kalibrierungsmittel starre oder halb starre Kugeln, insbesondere aus Metall, vom Typ Aluminium, Stahl, aus Glas, aus Keramik, aus Zeolith, der bevorzugt hydrophil ist, umfassen.

14. Verglasung nach einem der vorhergehenden Ansprüche, *dadurch gekennzeichnet, dass* das erste umfängliche Abdichtmittel mindestens eine Dichtung auf der Basis von Polymer(en), kombiniert mit mechanischen Verstärkungs- und/oder Kalibrierungsmitteln der Beabstandung zwischen den zwei Substraten umfasst, wobei die Verstärkungs- und/oder Kalibrierungsmittel Klötze umfassen, insbesondere Polyeder, die einen quadratischen, rechteckigen oder trapezförmigen Querschnitt haben, insbesondere aus Metall, aus Glas, aus Keramik, aus Glasfritte mit niedrigem Schmelzpunkt.

15. Verglasung nach einem der vorhergehenden Ansprüche, *dadurch gekennzeichnet, dass* das erste umfängliche Abdichtmittel mindestens eine Dichtung auf der Basis von Polymer(en), kombiniert mit mechanischen Verstärkungs- und/oder Kalibrierungsmitteln der Beabstandung zwischen den zwei Gläsern, umfasst, wobei die Verstärkungs- und/oder Kalibrierungsmittel einen oder mehrere Metalldrähte umfassen.

16. Verglasung nach einem der Ansprüche 13 bis 15, *dadurch gekennzeichnet, dass* die Kugeln und/oder Klötze und/oder Metalldrähte in der Dichtung auf der Basis von Polymer(en) eingebettet oder mindestens teilweise in die Dichtung eingelassen sind.

17. Verglasung nach einem der Ansprüche 13 bis 16, *dadurch gekennzeichnet, dass* sie in Form einer Verbundverglasung mit zwei starren oder halbstarren Substraten (1, 2) ist, zwischen welchen sich das aktive System (3) und eventuell eine Lage oder eine Vielzahl von Zwischenlagen (4) auf der Basis thermoplastischen Polymers befinden, *und dadurch, dass* der Durchmesser (di) der Kugeln und/oder die Höhe (1') der Klötze und/oder der Durchmesser (d2) des oder der Drähte und/oder die Höhe ($h_2$) des Rahmens zwischen e/2 und e - 0,1 mm inklusive mit (e) Gesamtstärke des oder der Zwischenlagen (4) oder gewünschter Beabstandung zwischen den zwei Substraten (1, 2) liegt.

18. Verglasung nach Anspruch 17, *dadurch gekennzeichnet, dass* der Wert (e) zwischen 0,35 mm und 1,25 mm inklusive liegt.

19. Verglasung nach einem der vorhergehenden Ansprüche, *dadurch gekennzeichnet, dass* sie ein zweites umfängliches Abdichtmittel in Form mindestens einer gegenüber flüssigem Wasser dichten Dichtung umfasst, insbesondere ausgewählt auf der Basis von Polyurethan, Silikon, Polysulfid.

20. Verglasung nach Anspruch 19, *dadurch gekennzeichnet, dass* das erste und das zweite umfängliche Abdichtmittel Dichtungen, die aneinandergefügt sind, umfassen.

21. Verfahren zum Herstellen der Verglasung nach einem der vorhergehenden Ansprüche, *dadurch gekennzeichnet, dass* die Dichtung oder die Dichtungen der umfänglichen Abdichtmittel durch Einspritzen in flüssiger Form, durch Extrusion oder in Form von vorab extrudierten oder vorab gegossenen Wülsten auf der bereits zusammengefügten Verglasung oder auf einem der Substrate der Verglasung vor dem Zusammenfügen abgebracht wird (werden).

## Claims

1. Laminated glazing comprising two substrates (1, 2) between which an active system (3) is placed, provided with a first peripheral sealing means (5), especially one sealing against water in vapour form, comprising at least one seal based on one or more hot-melt polymers chosen from at least one of the following polymer families: ethylenevinyl acetate, polyisobutylene, polyamide, or based on a mastic, especially one based on polyurethane, *characterized in that* it is in the form of laminated glazing with two rigid or semirigid substrates (1, 2) between which is the electroactive system (3) surmounted by at least one interlayer (4) based on a thermoplastic polymer, the interlayer or interlayers (4) having smaller dimensions than those of the two substrates (1, 2) so as to create a peripheral groove between the said substrates, the seal or seals of the first peripheral sealing means (5) comprising means for mechanically reinforcing and/or for gauging the space between the two substrates being at least partly, and preferably entirely, housed in the said groove, and **in that** the seals are placed so as not to come into contact with the electrically conducting layers of the active system (3).

2. Glazing according to claim 1, *characterized in that* the active system (3) is an electrochemical system, especially an electrically controllable system having variable energy/optical properties, such as an all solid-state electrochromic system, an optical valve system, a liquid-crystal system, a viologen-based system, a photovoltaic system or an electroluminescent system.

3. Glazing according to one of the preceding claims, *characterized in that* the active system (3) is a thermochromic, thermotropic, photochromic, solar-control or low-emissivity layer or multilayer.

4. Glazing according to one of the preceding claims, *characterized in that* the active system (3) is a grid of heating wires or a heating layer.

5. Glazing according to Claim 1, *characterized in* **that** the inner edge of at least one of the substrates, especially of both substrates, is bevelled so as to define a wider peripheral groove.

6. Glazing according to one of the preceding claims, *characterized in that* the polymer-based seal or seals (5) of the first peripheral sealing means also includes (include) at least one crosslinking agent, especially one made of an isocyanate and/or an epoxide.

7. Glazing according to one of the preceding claims, *characterized in that* the polymer-based seal or seals of the first peripheral sealing means also includes (include) a tackifying resin, especially one chosen from resins having a molar mass of less than 10,000 or 5000, of the hydrocarbon aliphatic resin type.

8. Glazing according to one of the preceding claims, *characterized in that* the polymer-based seal or seals of the first peripheral sealing means also includes (include) at least one mineral filler, especially one chosen from aluminium or magnesium oxide, silica sand, quartz, pyrogenic or nonpyrogenic silica, talc, mica, kaolin, glass microspheres and calcium carbonate.

9. Glazing according to one of the preceding claims, *characterized in that* the seal or seals of the first peripheral sealing means has (have) a softening point of between 70 and 180°C, especially between 90 and 100°C or between 145 and 170°C.

10. Glazing according to one of the preceding claims, *characterized in that* the seal or seals of the first peripheral sealing means has (have) a viscosity of between 0.1 and 20 Pa.s, especially between 0.8 and 8 Pa.s, at 190°C.

11. Glazing according to one of the preceding claims, *characterized in that* the seal or seals of the first peripheral sealing means has (have) a water vapour permeability of less than or equal to 5 or 4 or 3 $g/m^2/24$ h according to the ASTM E 9663 T standard.

12. Glazing according to one of the preceding claims, *characterized in that* the seal or seals of the first peripheral sealing means is (are) fitted by extrusion or injection in the liquid phase.

13. Glazing according to one of the preceding claims, *characterized in that* the first peripheral sealing means comprises at least one polymer-based seal combined with means for mechanically reinforcing and/or for gauging the gap between the two substrates, the said reinforcing and/or gauging means comprising rigid or semirigid balls, especially made of metal, of the aluminium or steel type, or made of glass or made of ceramic or made of zeolite, preferably a hydrophilic zeolite.

14. Glazing according to one of the preceding claims, *characterized in that* the first peripheral sealing means comprises at least one polymer-based seal combined with means for mechanically reinforcing and/or for gauging the gap between the two substrates, the said reinforcing and/or gauging means comprising studs, especially polyhedra having a square, rectangular or trapezoidal cross section, for example made of metal, glass, ceramic or low-melting-point glass frit.

15. Glazing according to one of the preceding claims, *characterized in that* the first peripheral sealing means comprises at least one polymer-based seal combined with means for mechanically reinforcing and/or gauging the gap between the two glass panes, the said reinforcing and/or gauging means comprising one or more metal wires.

16. Glazing according to one of Claims 13 to 15, **char-**

**acterized in that** the balls and/or studs and/or metal wires are embedded in the polymer-based seal, or at least partially incrusted in the said seal.

17. Glazing according to one of Claims 13 to 16, **characterized in that** it is in the form of laminated glazing with the two rigid or semirigid substrates (1, 2) between which the active system (3) and optionally one or more interlayers (4) based on a thermoplastic polymer are placed **and in** that the diameter ($d_1$) of the balls and/or the height ($h_1$) of the studs and/or the diameter ($d_2$) of the wire or wires and/or the height ($h_2$) of the frame is between ½e and e-0.1 mm where (e) is the total thickness of the interlayer or interlayers (4), or the desired gap between the two substrates (1, 2).

18. Glazing according to Claim 17, **characterized in that** the value (e) is between 0.35 mm and 1.25 mm.

19. Glazing according to one of the preceding claims, **characterized in** that it includes a second peripheral sealing means, in the form of at least one seal which seals against liquid water, especially one chosen which is based on a polyurethane, a silicone or a polysulphide.

20. Glazing according to Claim 19, **characterized in that** the first and the second peripheral sealing means comprise seals which are adjoined.

21. Process for manufacturing the glazing according to one of the preceding claims, **characterized in that** the seal or seals of the peripheral sealing means are deposited by injecting them in liquid form, by extrusion or in the form of pre-extruded or precast beads, on the already assembled glazing or on one of the substrates of the glazing before assembly.

FIG –1a

FIG –1b

FIG- 2

FIG-3

**EP 1 327 047 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5239406 A
- EP 61282 A
- FR 2770222
- EP 253713 A
- EP 670346 A
- EP 867752 A
- EP 831360 A
- FR 0000675 W
- FR 9901653 W
- WO 9309460 A
- EP 238164 A
- US 4435047 A
- US 4806922 A
- US 4732456 A
- WO 9219695 A
- EP 639450 A
- US 5615040 A
- WO 9420294 A
- EP 878296 A
- EP 785700 A
- EP 553025 A
- EP 506521 A
- EP 496669 A
- EP 638528 A
- EP 718250 A
- EP 724955 A
- EP 758583 A
- EP 847965 A
- US 6001487 A
- DE 91162068
- DE 4104108
- EP 499525 A
- EP 645516 A
- EP 627389 A